# EUROPEAN PATENT APPLICATION

(11) **EP 4 570 588 A1**
(43) Date of publication of application: **18.06.2025**
(21) Application number: 23216869.0
(22) Date of filing: 14.12.2023
(51) Int. Cl.: B60N 2/56, B60N 2/60, B60N 2/64, B60H 1/22, H05B 3/34

(54) **KNEEPAD FOR MOUNTING TO A BACKREST COVER OF A VEHICLE SEAT**

(71) Applicant: Autoneum Management AG, 8406 Winterthur (CH)
(72) Inventor: Bendell, Edward, 8050 Zürich (CH); Sansica, Valerio, 8400 Winterthur (CH); Ignatio, Mateo Vargas, 8404 Winterthur (CH)

(57) **Abstract**

Kneepad (5) for mounting to a backrest panel (4) of a vehicle seat (1) comprising a carrier layer (9), at least one cushioning layer (10) and a decorative surface covering layer (12) and whereby layers are laminated to adjacent layers. The kneepad further comprises a heating device (13) based on a woven fabric.

## Description

### Technical Field

The invention relates to a kneepad for a vehicle in particularly for a backrest for a vehicle seat and a seat back cover comprising such a kneepad.

### Background Art

Thermal comfort of the passenger compartment has been an issue for vehicles for a long time, in particular in colder regions and or during colder periods of the year, the temperature needed to achieve thermal comfort of the passenger is a challenge. As the vehicle may reach and maintain sufficient warmth after some driving time, in particular at the beginning, the passenger may feel uncomfortable due to the temperature.

Electrically heating the airflow at the beginning of a drive, and/or including seat heating in the cushions of the front seats results in reaching a comfortable temperature at the front seats more quickly. However, the situation on the second row of seats is more complex. As the heated airflow is running underneath the front passenger flooring to the back exits of the system, it might happen that this airflow is even cooled down by the low temperature in the bottom of the car. Hence, rear seat passengers need to wait even longer before the airflow produced by the HVAC starts to heat the surrounding air in the passenger compartment.

The seat heaters, which are mainly used for the front seats, function as contact heaters whereby the object to be heated - the occupant of the seat - is in immediate contact with the heated area. This prevents any heat loss and gives the occupant an almost instant thermal comfort, at least for those areas in contact. As these heaters are prone to locally overheating the occupant in the contacting areas, they will automatically switch off after reaching a preferred temperature. As the occupant stays in contact the heat produced will be maintained for a prolonged period of time, and reheating is unnecessary. However, these heating systems are not able to be used in situations where there is no direct contact between the heated-up surface and the receiving occupant of the car.

Hence, the problem is to obtain thermal comfort for the back seat passengers.

Modern car seats for in particular the front row including the driver seat, are complex products with a seat body having a seat base and a backrest arranged to extend upward form the base. They may include means for adjusting the seat base and backrest for instance in angle and height as well as may comprise additional appliances like the seatbelt and regulation or occupancy sensors.

There are different types of seat layouts. One type of seat layout comprises a hard shell as the back cover for the backrest. This hard shell back cover functions as an impact protection for both the occupant of the seat as well as for the occupant of the seat behind the front row seats. In the case of a major brake incident any occupant and or objects placed behind the seat may be propelled to the front, damage the backrest of the seat, and injury to the occupant may occur. Using a hard shell as a backrest back cover functions therefore as an impact protection plate.

Current solutions on the market to integrate the heater directly in the backrest, for instance by opening the backrest cover to create a window for the heating device, may impair the function of the backrest plate and reduce the impact protection. Furthermore, integrating the heating device within the exterior covering of the seat reduces the choice of materials for the seat covering and hence the overall freedom of design of the passenger compartment for the car maker.

External heaters integrated in foldable solutions based on rigid materials also pose an additional risk in the case of a braking incident. Any protruding hard objects colliding with the occupant sitting in front of it will result in an impact of a line or point and will increase the risk for major injuries. Hence, using foldable tables or plates are not a satisfactory solution either.

It is the goal of the invention to present an alternative solution that can reduce the problems of the state of the art, in particular that is able to increase thermal comfort for passengers in back row seats without increasing the risk of injuries in case of a brake incident.

### Summary of the invention

The objective is achieved with the kneepad for mounting in a vehicle preferably to a backrest cover of a vehicle seat comprising a carrier layer, at least one cushioning layer and a decorative surface layer and whereby layers are laminated to adjacent layers according to the main claim and to a backrest cover of a vehicle seat comprising such a kneepad.

In particular, with a knee pad further comprising a heating device comprising a woven fabric with a warp and a weft comprising nonconductive threads, and whereby the woven fabric further comprises conductive threads in one of the warp and the weft and high resistance threads perpendicular to the conductive threads, and whereby the heater device further comprises means for connecting the conductive threads to a power supply, and whereby the heater device is between the layers.

Surprisingly, by integrating a heating device based on a woven fabric in a kneepad it is possible to create enough radiation heat to increase the thermal comfort of the occupant of the seat opposite the kneepad without impairing the impact protection of the backrest cover itself or increasing the risk for the back seat passenger, even without the need for direct contact between the passenger and the heated surface.

In a standard personal car with a front row of seats and a second row of seats the kneepad with heating device may be placed on one or both backrest covers of the front seats to enable a local heating of the second-row passengers. In a personal vehicle with 3 or more rows, each row of seats that are in front of a next row of seats or each seat in front of another seat may have at least one knee pad with heating device according to the invention.

Alternatively, the kneepad may be also placed on side walls of a car or truck to give additional protection and a local heating source. The size and shape of the kneepad may be adapted to the available space.

It was found that by using a woven fabric with a warp and a weft comprising nonconductive threads and whereby the woven fabric further comprises conductive threads in one of the warp and the weft and high resistance threads perpendicular to the conductive threads as the heat generating part, a safe and soft solution is found that would not create any rough edges or sharp points upon impact with an object. Even more advantageous, it was found that puncturing with a sharp object does not create an electric current dangerous for a person and it will not have a major impact on the heater capacity.

Surprisingly, the woven heater fabric when placed inside the kneepad radiates enough heat to warm up any occupant sitting opposite of the knee pad comfortably without risk of burning upon contact. Although contact is possible, the kneepad layers reduce the risk. Even at a distance, the effect of the heating device within the kneepad is measurable.

Even if the heating device is not in use the comfort of the backseat occupant is increased with a soft area when in touch with any body part, while the soft cushioning layer and the fibrous carrier layer together will still function to break or soften the effect of minor brake incidents.

Preferably the warp and or the weft of the woven fabric for the heating device comprises threads based on polymer filaments or fibres, preferably the polymer is a polyester, even more preferably a terephthalate based polymer or polyamide (PA) or a polylactic acid (PLA).

By using a terephthalate based polymer, like for instance a polyethylene terephthalate (PET), the heating device will be heat stable over a prolonged period of time. Furthermore, if the heating device is combined with other polyester based layers, the kneepad may be formed of a close to 100% mono material solution and is easier to recycle at end of life.

The high resistance threads may be formed of the same polymer as the nonconductive threads coated with a carbon type layer, be a carbon fiber, or an alloy comprising thread, for instance a nickel alloy-based thread or any of other alloys known in the state of the art for resistive heating wires.

In a preferred embodiment, monofilaments are especially used for the electrically conductive threads. The diameter of the threads may be optimised to the required resistance. Preferably each conductive thread formed is coated with a nonconductive layer. Alternatively, bicomponent filaments are used with a conductive core and a non-conductive sheath, increasing the safety of the woven fabric, and enabling a closer proximity of conductive fibers to neighbouring conductive fibers.

The material of the conductive threads can consist of any chosen electrically conductive material. For example, the conductive threads can by metal based preferably copper or silver. The thread can be built up of multiple threads of the conductive material. It is particularly advantageous to use copper or silver wires as electrically conductive threads. Both have the advantage, among other things, that the specific resistance of the thread produced therefrom is very constant across the entire length and can also be determined in a highly precise manner.

Conductive lanes formed by conductive thread either only in the warp direction or only in the weft direction may be connected with at least one electrode strip. Additional electrode strips may be used to bridge holes within the fabric or increase the reliability of the heater also after minor puncture accidents. The electrode strip may be welded on top the fabric connecting the ends or the beginning of the conductive lanes formed by the conductive thread or threads. Alternatively, the electrode strip may be woven into the fabric either as a strip or bundles of wire. The electrode strips are part of the means for connecting to a power supply.

The use of an electrode strip has the disadvantage that the area forms a non heat able area. It was found by folding the area over to the side away from the surface of the kneepad, it is possible to increase the actual area that can be used on the kneepad surface without impairing the function of the heating device. Optionally to prevent any short circuits, the fabric may be coated with a nonconductive coating or wrapped or laminated in a thin polymer foil layer, at least in the area where the folded fabric may come into contact with itself. Alternatively, the fabric may be folded to a side of the kneepad, which is not necessary for the heating function.

Hence folding the connectors in the form of electrode strips to the side of the kneepad would reduce the risk of short circuits while the need of a nonconductive coating may be reduced or even not necessary.

The kneepad according to the invention comprises a carrier layer, at least one cushioning layer and a decorative surface layer and whereby layers are laminated to adjacent layers. The heating device may be arranged between the carrier layer and the cushioning layer or between the cushioning layer and the decorative surface layer.

The decorative surface layer is wrapped around the other layers to form at least the visible front surface and at least part the sides of the kneepad, it may be wrapped around to even cover at least part of the backside of the kneepad. The decorative layer may be extended to the backside of the kneepad to cover the carrier layer at least partially.

The decorative surface layer may be any suitable surface layer that is aesthetic and able to withstand the high temperatures generated by the heating device over a longer time period without deterioration. This may be at least one of a fabric, natural or artificial leather, thermoplastic polyolefin layer, vinyl, or fibrous nonwoven layer, for instance an Alcantara^{®}.

Alcantara^{®} is a microfiber fabric comprising polyester and polyurethane, preferably up to 70% polyester and up to 30% polyurethane by weight.

Alternatively, the surface layer is polyester based, preferably PET based, for instance in the form of a knitted fabric, tufted carpet or needle punch nonwoven type fabric. The surface layer is preferable from a material that is cooled when in touch with the surface of the hand. In particular hard injection moulded plastic or metal type surfaces would aid the heat distribution to the hand and might cause earlier a burning sensation. So preferably soft fibrous or foam type materials, like fabric or foamed fabric layers are used.

The decorative layer may be at least partially microperforated with holes up to 2mm, preferably up to 1mm. In particularly the area covering the heating area of the heating device may have perforations to aid the radiation of the heat.

The kneepad including the heating device according to the invention may further comprise a spacer layer or cushioning layer between the decorative surface layer and the heating device. Preferably the spacer layer is made of foam or felt with a combination of thermal conductivity, heat capacity and density such that the temperature on the surface of the kneepad will not be above 80°C.

Also, for this layer it is important to use materials able to withstand the high thermal load over the use of the part in the car. Hence thermal resistance foams and or fibers are preferred, for instance polyester based felts, like terephthalate based fiber felt material and or natural fiber felts like cotton.

The spacer layer may be combined with the decorative surface layer at least in the area of the heating device. For instance, a fabric combined with a foamed layer may be already enough to decrease the surface temperature under the maximum allowed temperature to prevent any burn injuries in the case of prolonged contact with the surface.

To prevent the kneepad with the heating device from sagging during the use as well as to enable easier production, it is preferable that the carrier layer is made of a material with a certain bending stiffness.

Preferably the carrier layer comprises at least one layer with a bending modulus of between 180 and 230 MPa as measured according to ISO 178

A carrier layer made of plastic, like ABS, chosen such that it does not form shards or sharp edges may be an option. Preferably, the carrier is made of a material that is soft upon impact, like a rigid foam or compressed felt layer. The compressed felt layer may be made of a carded or airlaid felt which may be needled to increase stiffness. The felt material may comprise up to 50% binder to further increase stiffness upon compression moulding. The compressed layer may be a multilayer material eventually with at least one layer of reclaimed or recycled material.

Preferably the layer is at least one of a foam or compressed felt material with a density of between 330 and 370 kg/m³.

The carrier layer may comprise at least one of synthetic, preferably thermoplastic fibers like polyester, or polyolefin based fibers or natural fibers preferably cotton, bast or similar.

Using just a compressed felt as the carrier layer behind the heating device would increase the time needed to achieve the required surface temperature.

Surprisingly, by using an optional cushioning layer between the carrier layer and the heating device, the response time is reduced, hence the comfort temperature for the occupant of the seat opposite the kneepad is reached earlier.

The cushioning layer is preferably a heat stable thermal insulating material, preferably based on a thermoplastic felt layer or a foam layer.

The cushioning layer may comprise at least one of a foam, preferably a foam based on polyurethane, or a felt, preferably a felt comprising thermoplastic fibers and binder. As the fibers need to be thermostable over a prolonged period of time, preferably a felt layer whereby fibers and binder are terephthalate based is used.

A soft thermostable foam layer may be used either a slab foam, a foam layer cut from a larger foam block, or an injection moulded foam layer may be used. Preferable the foam is mouldable to create the shape of the kneepad and to combine all layers together in a moulding process. The foam is preferably a polyurethane. Preferably an open cell foam may be used to enhance the insulation and the softness of the kneepad.

Alternatively, a light semirigid mouldable block foam may be used, could be polyether or polyester based polyols. For additional safety a flame retardant, for instance an expandable graphite or any known chemical flame resistant may be used in the foam. The foam used has preferably a density of between 12-15 kg/m³ before moulding.

All layers may be laminated together either due to the material composition or by using an adhesive layer, for instance an adhesive powder, scrim, foil to bond or laminate the layer together.

A reflective foil may be optionally used behind the heating device, to increase the heating output to the front of the kneepad, and reduce any heat dissipation to the back of the kneepad.

In a further embodiment according to the invention the kneepad is combined with a backrest of a vehicle seat comprising a backrest cover for preventing impact damage from flying objects. The backrest cover comprises at least a hard shell, and a decorative layer facing the rear of the vehicle towards a next row of seats. The backrest shell comprises a kneepad according to the invention mounted to the backrest shell with means for mounting such that any heat generated by the heating device is directed at least to the lower extremities of any occupant of the next row of seats.

The decorative layer for the backrest of the front seat may be formed of a natural or synthetic leather for instance animal leather, vegan leather replacement materials for instance made of poly lactic acid, thermoplastic polyolefin (TPO) or polyvinyl chloride (PVC). Here, synthetic leather based on PVC includes synthetic leather formed only of PVC and synthetic leather having PVC as a main component. Further, the decorative covering layer may be formed of synthetic leather containing another material such as polypropylene (PP). Alternatively, the decorative cover layer may be fiber based like a nonwoven, knitted or woven fabric, and so forth. The decorative cover layer may be a mixture of varied materials, for instance leather with fabric inserts. It may be embellished with embossments or stitched seams.

As the kneepad heater is mounted on top of the backrest cover with preferably an airgap, only minimal temperature related material degradation is to be expected by the heating temperature. Hence the seat may contain its regular design and decorative cover chooses, with or without the kneepad heater option. This is an advantage in reducing of complexity in part choice and combinations possible during the assemblage of the vehicle as well as the production of the part. In principle the kneepad may be produced with and without the heater element maintaining the layer layout. As the thickness of the heater element is small it will not have an impact on the overall moulding of the part with or without heater. Hence the use of a kneepad with or without heater is interchangeable and can be sold as an option without the need for substantial changes on the design or production of the parts.

The hard shell of the backrest cover is preferably a thermoset composite material. Preferably it is made of a composite based on natural fibers for instance cotton, kenaf or jute fibers or a mixture of natural fibers, and a thermoset binder, for instance a phenolic based or epoxy based binder. Preferably between 20-30% by weight of the part is binder and up to 80% by weight of the hard shell part is fibers. The cover may be moulded separate, laminated with the decorative cover and when necessary prepared for taking up the means for mounting of the kneepad as well as an optional pass through of electric cables for the power supply of the heating device.

Alternatively, the hard plate may be made from a carbon or glass fiber-based composite, or an injection moulded plastic. Injection moulded plastic does not necessarily have a need for covering. The melting temperature of the plastic used may not be below the temperature generated by the heater to prevent any imminent damage to the integrity of the impact feature of the hard scale.

### Figures

Figure 1 Schematic drawing of vehicle seating arrangement
Figure 2 Schematic drawing of a vehicle seat backrest of a front row seat according to the invention and its cross section
Figure 3 a schematic drawing of a kneepad cross section with heating device according to the invention

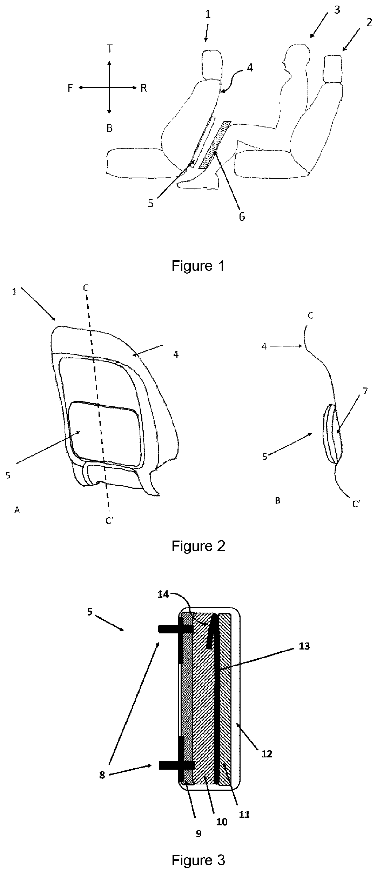

Figure 1 is depicting a possible seating arrangement in a vehicle comprising multiple rows of seats, with a first row of seats 1 and a second row of seats 2, whereby any occupant 3 of the second row of seats is facing towards the backside 4 of the seat in front of it, in this case the first row. For invention's sake this might be any other combination of rows whereby one row is facing towards the back of the row in front of it. However most vehicles or passenger cars have a first row including the driver and a second row for passengers, and in rare cases a third row in addition for passengers. Also, the situation of this third row when facing the back of the second row would benefit from the invention as disclosed and claimed.

The backside of the backrest of the first row of seats may have a kneepad with a heating device as claimed mounted to preferably the lower area of the backrest. Preferably at least the area 6 opposite the lower areas of the occupant using the second row of seats -like the lower legs and eventually the feet are benefitting from the radiating heat of the heating device placed in the kneepad.

Integrating the heating device in the kneepad has the advantage that retrofitting and replacement are easy to achieve. Furthermore, in the case where heating is not necessary, a soft kneepad to protect the knees against impact or unpleasant hard surfaces still increases the comfort of the passenger.

However, the materials are chosen such that in the case of a crash no hard surfaces can damage any occupant of the first or the second row of seats, to the contrary by using soft materials for all layers the knee pad functions as an additional cushioning in case of a crash.

Figure 2 A and B are showing the backrest of the first row of seats 1 without the cushions of the seat. Figure 2b is showing a cross section C-C' of the backrest of figure 2a also without the cushions of the seat itself.

The backrest of the seat is formed by at least a cushioning (not shown) and a hard shell 4 with a decorative layer (not shown). The hard shell 4 is functioning as an impact protection and may prevent any damage to the occupant of the front seat in case of a brake accident, whereby objects, like parcels or occupants, can fly from the back against the backrest of the seat in front. This is even more important when the back rows are used as flat storage area. As the hard shell is a strong plate the kneepad 5 including the heating device - in short kneepad heater - according to the invention is preferably mounted to this hard shell directly to obtain a strong mounting solution, the means for mounting may penetrate the hard shell completely and/or the means may be integrated in the structure of the hard shell. The kneepad heater 4 may be placed within a recess formed in the hard shell to get a flush design. Preferably an airgap 7 is kept free between the back of the kneepad heater and the surface of the backrest of the chair.

The backrest of the chair with the recess is built by the hard shell covered by a decorative surface layer as requested by the car maker. It is an advantage that the kneepad heater is not part of the seat covering or integrated within the seat covering. As it is placed on top of the outer covering of the backrest, the standard materials and processes to cover seats may still be used. Furthermore, as the kneepad heater is placed in a distance from the backrest cover, also any residual heat at the back of the panel cannot negatively interfere with the durability of the cover layer over time.

The cross section shows the impact plate 5 curved to encompass the soft cushioning of the front seat backrest as well as possible appliances hidden within the backrest of the chair, like electric components for any movement of the chair and or seat heater for the front seat cushioning.

Any electronic wiring is preferably integrated within the chair backrest and may be combined with the means for mounting to prevent any interference with the integrity of the hard shell to prevent any reduction of the impact protection.

Preferably the means for mounting are placed in areas where in case of an impact incident with an occupant the least injury is expected, whereby the placement of airgap as well as the cushioning of the heated kneepad might cover any hard points within the heater and or mounting appliances and reduce risk of injuries in in particular minor incidents.

Figure 3 is showing a possible schematic cross section through a kneepad with heating device -kneepad heater- according to the invention. The kneepad heater in this example comprises a stiff fibrous layer 9, a cushioning layer 10, a heater device 13, optionally a spacer layer 11. The whole package is wrapped around at least the front and side faces with a decorative layer12.

Decorative layer 12 and optionally spacer layer 11 are chosen such that the average surface temperature will stay underneath the tress hold value defined by the temperature someone can safely touch with their skin over a prolonged time period without burning.

For example, decorative layer 12 and optionally spacer layer 11 are thermally designed such that in case the heating device 13 reaches a temperature of for example 150°C the average surface temperature will maintain under 85°C.

The connecting wires forming an area 14 can be placed at the rim of the fabric and may preferably folded away from the main visible surface of the kneepad to increase the surface coverage of the fabric on the pad. Surprisingly, the fabric can be folded without any negative effect on the capacity or security of the heating device.

The polyester monofilaments used in the woven fabric for the heater are preferably terephthalate based, preferably one of polyethylene terephthalate or polybutylene terephthalate.

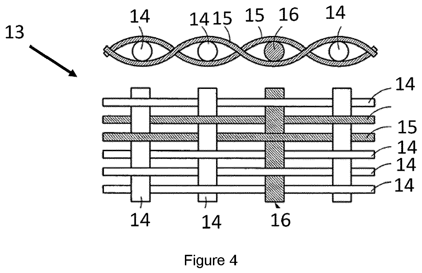

Figure 4 is showing schematically an example part of the woven fabric of the heating device 13. The woven fabric has a warp and a weft, whereby for clarity the warp is given in vertical direction in the figure and shown with thicker lanes or threads. The weft is given in horizontal direction with thinner threads. Although in most woven fabrics the warp is made of stronger threads than the weft, even weaves with both being of the same strength material may be an option as well. The main body of the woven fabric is comprising non-conductive threads 14 in both warp and weft direction to create a strong and resilient fabric. In this example conductive threads are woven in pairs in the weft direction 15, with nonconductive groups in between pairs of conductive threads. In addition, high-resistance threads 16, extend transversely to the conductive threads 15 and generate uniform heating over the entire heating area.

## Claims

1. Kneepad for mounting to a backrest cover of a vehicle seat comprising a carrier layer, at least one cushioning layer and a decorative surface layer and whereby layers are laminated to adjacent layers **characterised in that** the knee pad further comprises a heating device comprising a woven fabric with a warp and a weft comprising nonconductive threads and whereby the woven fabric further comprises conductive threads in one of the warp and the weft and high resistance threads perpendicular to the conductive threads, and whereby the heater device further comprises means for connecting the conductive threads to a power supply, and whereby the heater device is between the layers.

2. Kneepad according to claim 1, whereby the nonconductive threads comprise fibers or filaments based on at least one of polyester, polyamide and polylactic acid based material.

3. Kneepad according to claim 1 or 2, whereby the conductive threads are monofilaments metal based, preferably copper or silver wire.

4. Kneepad according to one of the preceding claims, further comprising a spacer layer between the decorative surface layer and the heating device, preferably a layer made of foam or felt.

5. Kneepad according to one of the preceding claims, whereby the carrier layer comprises at least one layer with a bending modulus of between 180 and 230 MPa as measured according to ISO 178, preferably a compressed fibrous felt layer or foam layer.

6. Kneepad according to one of the preceding claims, whereby the cushioning layer comprises at least one of a foam, preferably a foam based on polyurethane, or a felt layer, preferably a felt layer comprising thermoplastic fibers and binder, preferably a felt layer whereby fibers and binder are terephthalate based.

7. Kneepad according to one of the preceding whereby the means for connecting the conductive threads are formed as a connector strip substantially perpendicular to the conductive threads.

8. Kneepad according to one of the preceding claims, whereby the area of the woven fabric with the means for connecting is folded over such that the full surface of the kneepad is covered with the heat generating fabric area.

9. Kneepad according to one of the preceding claims whereby the decorative layer may be at least one of a fabric, woven or knitted fabric, natural or artificial leather, thermoplastic polyolefin layer, vinyl layer, or fibrous nonwoven layer or a microfiber nonwoven layer, or a combination of such layers optionally combined with a back-foamed surface layer.

10. Kneepad according to one of the preceding claims whereby the decorative layer is microperforated with holes up to 2mm, preferably up to 1mm.

11. Kneepad according to one of the preceding claims, further comprising a reflective film layer, preferably a metallic or metalized foil layer, between the carrier layer and the heating device placed directly adjacent to the heating device.

12. Kneepad according to one of the preceding claims whereby the means for connecting the conductive fibers warps or wefts is formed as a connector strip perpendicular to the conductive fibers.

13. Kneepad according to one of the preceding claims whereby the woven fabric area with the means for connecting is folded over such that at least the main surface of the kneepad is covered with the heat generating fabric.

14. Backrest of a seat in a vehicle comprising a backrest cover for preventing impact damage from flying objects stored behind the seat, whereby the backrest cover comprises a hard shell, and an outer decorative layer, **characterised in that** the backrest shell comprises a kneepad according to one of the previous claims mounted to the backrest shell with means for mounting such that any heat generated by the heating device is directed towards an occupant directly.

15. Use of the kneepad according to one of claim 1 to 14 for any area of the passenger compartment opposite at least the lower body parts of occupants of the vehicle, any trim part in the leg space of any seat area, on the middle tunnel area, which may come in contact with the legs or knees of the occupant, side panels or seat back panels, or wall panels in truck.
